**Europäisches Patentamt**

**European Patent Office**

**Office européen des brevets**

(19)

(11) Publication number : **0 474 459 A2**

# (12) EUROPEAN PATENT APPLICATION

(21) Application number : **91308051.1**

(51) Int. Cl.⁵ : **G01C 9/14**

(22) Date of filing : **03.09.91**

(30) Priority : **07.09.90 GB 9019548**

(43) Date of publication of application :
**11.03.92 Bulletin 92/11**

(84) Designated Contracting States :
**DE DK ES FR GB GR IT NL SE**

(71) Applicant : **Anderson, Charles Abernethy**
**Hareness Circle, Altens**
**Aberdeen AB1 4LY, Scotland (GB)**

(72) Inventor : **Anderson, Charles Abernethy**
**Hareness Circle, Altens**
**Aberdeen AB1 4LY, Scotland (GB)**

(74) Representative : **MacDougall, Donald**
**Carmichael**
**Cruikshank & Fairweather 19 Royal Exchange**
**Square**
**Glasgow G1 3AE, Scotland (GB)**

(54) **Inclinometer.**

(57)    An inclinometer comprising a tubular casing (1), a sleeve (22) formed internally with steps (54) of progressively increasing diameter and a venturi ring (52) spring-urged to move axially within the casing between end portions, a central rod (42) presenting a series of co-axial rings (44) with any one of which the venturi ring on the sleeve is selectively cooperative according to the position of the sleeve to provide a restriction projecting into the sleeve, and a pendulum (46) universally pivotally attached to the rod (42) and formed with an annular radially projecting latching shoulder (50) engageable with a particular one of the steps on the sleeve according to the position of the sleeve.

As sleeve moves under mud pressure pendulum moving from vertical engages a particular step and stops movement of the ring under mud pressure. Counting of number of pressure pulses as venturi ring moves along rod gives position of step engaged by pendulum and inclination angle of inclinometer.

EP 0 474 459 A2

Fig.1A.  Fig.1B.

This invention relates to an inclinometer, and relates more particularly but not exclusively to an inclinometer for measuring the angle of inclination from vertical of a near-vertical well bore.

When drilling hydrocarbon wells (whether on land or at sea), the inclination of the borehole may intentionally or unintentionally deviate from purely vertical. Accurate drilling of a well requires that such deviation be measured, and the deviation from vertical relayed to the drilling crew for appropriate action. However, the lowering of an inclinometer on a wireline to measure downhole inclination, and its subsequent retrieval, requires a time-consuming interruption of drilling and is therefore undesirably expensive.

It is therefore an object of the invention to provide an inclinometer suitable for incorporation into a drillstring in or adjacent a bottom-hole assembly thereof, the inclinometer being capable of telemetering a measured inclination to a wellhead receiver without removing the inclinometer from the well bore.

According to the invention an inclinometer for measuring the angle from vertical of a well bore is characterized by comprising a tubular casing formed at its opposite ends with connection means arranged to permit the casing to be connected into a drill string as a constituent part of the string, a sleeve located within the casing and spring-urged to move axially in the direction from one end position to another end position within the casing the inner surface of said sleeve being formed with a series of circumferential steps of progressively increasing diameters and with an internally projecting annular venturi ring displaced axially from the series of steps, damping means arranged to control the rate of axial movement of the sleeve, a central rod fixed to and located co-axially of the casing and projecting into one end of the sleeve, said fixed rod having a portion formed with a series of co-axial rings and a pendulum universally pivotally attached to the rod at one end of the rod and formed with an annular radially projecting latching shoulder, the relative dispositions of the parts being such that when the sleeve is at said one position the venturi ring presented by the sleeve is near one end of the portion of the central rod formed with the co-axial rings and the pendulum is in the portion of the sleeve formed with the steps of smallest diameter and when the sleeve is at said other position the venturi ring is withdrawn from the portion of the central rod presenting the co-axial rings and the pendulum is withdrawn from beyond the step of largest diameter of the stepped portion of the sleeve.

The sleeve may present an internal pendulum centring spider positioned such that in said one position of the sleeve said spider engages the pendulum and holds it in a central position with respect to the sleeve.

The damping means may be provided by forming the main portion of the sleeve to an outside diameter less than the inside diameter of the casing thus presenting an annular gap between the sleeve and the casing and forming another portion of the sleeve as an outwardly projecting shoulder of a diameter to fit the casing as a piston, and a static sealing ring fixed to the casing surrounding the sleeve and sealingly in contact therewith at a position spaced from said shoulder on the sleeve thus providing an annular space of finite volume, means being provided to admit a damping fluid into said annular space,

The damping fluid may be a gas or a liquid such as oil.

Preferably the axial spacing between adjacent rings on the central rod should be the same as the spacing between adjacent steps in the inner surface of the sleeve.

There may also be provided an annular floating piston capable of moving axially in said annular gap but limited in its axial movement in the direction away from the shoulder on the sleeve by an abutment presented by the casing.

The spring urging the sleeve to move to said one end position may be a helical compression spring surrounding the sleeve and located in the annular space defined by the outer surface of the sleeve, the inner surface of the casing, the shoulder on the sleeve and the static sealing ring presented by the casing.

The casing may be formed in several co-axial portions which may be screw-threaded to one another.

The central rod may be supported in the casing by at least one spider. The or one spider may be clamped between adjacent portions of the casing.

The static sealing ring presented by the casing may be clamped between other adjacent portions of the casing.

The abutment presented by the casing and limiting floating movement of the floating sealing ring may be presented by the end of one portion of the casing section which is formed to be of larger diameter than the adjacent section.

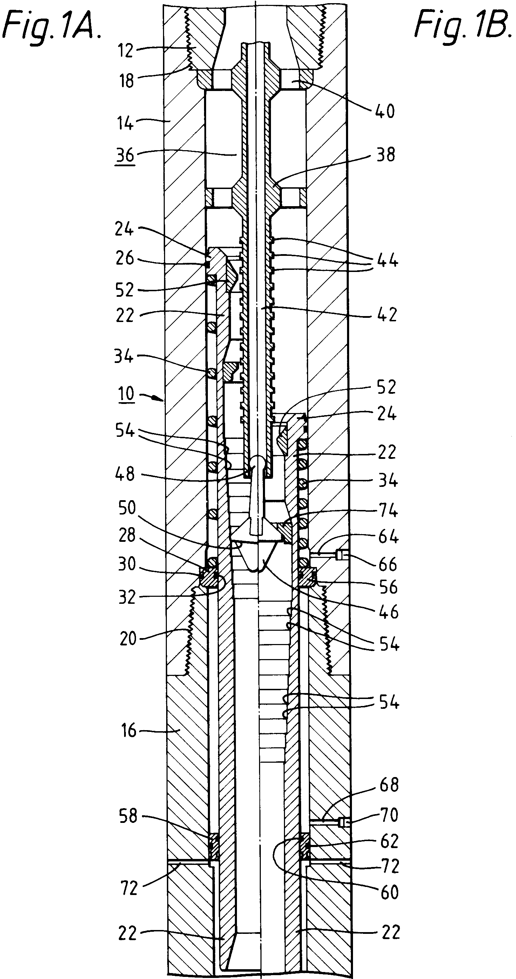

A practical embodiment of the invention is illustrated in the accompanying drawing in which Fig. 1A And Fig. 1B are left and right half longitudinal sections of an inclinometer showing in the left hand section 1A the sleeve in an upper position and in the right hand section 1B the sleeve in its lowermost position.

The inclinometer 10 comprises an inclinometer casing formed of three sections, an upper section 12, an intermediate section 14, and a lower section 16 coupled to one another by tapered screw-thread connections 18 and 20. Not shown in the drawing are a tapered screw-thread connection at the top of the upper second 12, and a further such tapered screw-thread connection at the bottom of the lower section 16, these connections serving to connect the inclinometer 10 into a hollow drillstring (not shown) as part of or adjacent to the bottom hole assembly thereof and such that mud pumped down the drillstring during drilling operations is channelled down through the hollow interiors of the sections 12, 14 and 16.

A sleeve 22 is slidably mounted within the intermediate and lower casing sections 14 and 16. The external diameter of the lower sleeve 22 is somewhat less than the internal diameters of the casing sections 14 and 16 so as to leave annular gaps between these relatively movable components, for purposes to be detailed below. A radially outwardly projecting shoulder 24 is formed integrally with the upper end of the sleeve 22 to support and guide sliding movement of the upper end of the sleeve 22 on the interior surface of the casing section 14, to which the shoulder 24 is also slidably sealed by a peripheral O-ring 26. The shoulder also functions as a piston in the casing.

A radially inwardly projecting static ring 28 is clamped between the adjacent ends of the intermediate and lower casing sections 14 and 16 by operation of their mutual screw-thread connection 20. The static ring 28 is externally sealed to the interior surface of the intermediate housing section 14 by a peripheral O-ring 30 or other suitable seal. The inside of the static ring 28 supports and guides sliding movement of the sleeve 22 to which the ring 28 is also slidably sealed by an internal circumferential O-ring 32 or other suitable seal.

A coiled compression spring 34 is housed in the annular gap between the upper end of the sleeve 22 and the intermediate casing section 14. The upper end of the spring 34 bears against the underside of the sleeve shoulder 24, while the lower end of the spring 34 bears against the upper side of the static ring 28. Thereby the spring 34 biasses the sleeve 22 to move upwards within the inclinometer housing 12+14+16, Fig. 1A showing the sleeve 22 near (but short of) of its uppermost position, and Fig. 1B showing the sleeve 22 in its lowermost position.

A static mounting assembly 36 is radially supported inside the intermediate housing section 14 by means of a spider 38 peripherally bearing against the interior surface of the housing section 14, the assembly 36 also being radially and axially supported by a further spider 40 peripherally clamped between the adjacent ends of the upper and intermediate casing sections 12 and 14 by operation of their mutual screw-thread connection 18. The assembly 36 includes a central rod 42 which mounts a longitudinally elongated array of thirteen pulse rings 44 coaxial with and equally spaced along the axis of the inclinometer 10.

At the lower end of the mounting assembly 36 is a pendulum 46 which depends from a spherical pivot 48 allowing the pendulum 46 to move in any direction off the central axis of the inclinometer 10 in accordance with the inclination from vertical of the inclinometer casing 12, 14, 16 (the pendulum 46 being coincident with the central axis when the inclinometer casing is exactly vertical). Whether the pendulum 46 swings freely or is restrained by contact with one or more other components of the inclinometer 10 will depend on various circumstances detailed below.

The pendulum 46 has a latching shoulder 50 extending circumferentially around its periphery, for a purpose described subsequently.

The upper end of the hollow sleeve 22 is internally fitted with a bi-conical venturi 52 whose throat is dimensioned to pass over the pulse rings 44 secured on the mounting assembly 36, and on each such passage, to produce a pulse of back-pressure in mud flowing down the drillstring and through the inclinometer 10, such pulses each being of an amplitude to be readily detectable on a pressure gauge or pressure log coupled into the mudline at the wellhead. It will be seen from Figs. 1A and 1B respectively, that the range of possible movement of the sleeve 22 is such that the venturi 52 will reach upwards to the top of the array of pulse rings 44, and downwards to the bottom of the array of pulse rings 44, in their positions on the static mounting assembly 36.

The interior of the sleeve 22 is formed with a longitudinally extending array of circumferential steps 54. The diameters of the steps 54 progressively increase from the bottom of the array of steps to the top of the array of steps inside the sleeve 22, and have dimensions related to the diameter of the pendulum latching shoulder 50 in a manner detailed below. The steps 54 have mutually equal longitudinal spacings equal to the mutually equal longitudinal spacings of the pulse rings 44. The array of steps 54 is longitudinally located inside the sleeve 22 such that as the sleeve moves from its lowermost position (as shown in Fig. 1B) to its highermost position (somewhat above the position shown in Fig. 1A), the array of steps 54 longitudinally traverses the latching shoulder 50 on the pendulum 46 from its highest (and greatest diameter) step to its lowest (and least diameter) step. Such relative movement is at the heart of inclination-measuring operation of the inclinometer 10, as will be explained below.

Longitudinal movement of the sleeve 22 within the inclinometer casing sections 14 and 16 is hydraulically damped by utilising the slidingly sealed and variable volume annular gap housing the spring 34 as part of a hydraulic damper. This annular gap is filled with a suitable oil, and the oil enters or leaves the variable volume annular gap by a fine-bore longitudinal through hole 56 in the static ring 28, the hole 56 providing a predetermined hydraulic flow resistance.

The further annular gap immediately beneath the static ring 28 is utilised as a reservoir of hydraulic oil for the damper, and is sealed from the drilling mud normally filling the remainder of the interior of the inclinometer 10 by means of an annular floating piston 58 slidably sealed on its inner periphery to the exterior surface of the sleeve 22 by an O-ring 60 and also slidingly sealed on its outer periphery to the interior surface of the lower casing section 16 by a further O-ring 62. The annular piston 58 longitudinally "floats" in the annular gap below the static ring 28, at a position in which the pressures on either side substantially balance. The piston 58 functions as a self-positioning lower end seal to the damper reservoir, whose passive (non-pumping) volume varies inversely with the active volume of the annular gap housing the spring 34.

The active volume of the damper can be primed and de-aerated through a lateral vent 64 in the intermediate casing section 14, the vent 64 being sealed in normal use of the inclinometer 10 by means of a screw plug 66.

The reservoir volume of the damper can be primed and de-aerated through a lateral vent 68 in the lower casing section 16, the vent 68 being sealed in normal use of the inclinometer 10 by means of a screw plug 70.

The annular gap immediately below the maximum downreach of the annular piston 58 is vented by permanently open lateral vents 72 in the lower casing section 16.

Having described above the essential structure of the inclinometer 10, its inclination measuring and telemetering functions will now be detailed.

With the inclinometer 10 coupled into the drillstring and lowered thereby nearly to the bottom of a well borehole, but prior to the commencement of pumping of drilling mud down the drillstring, the spring 34 will have forced the sleeve 22 to its uppermost position (ie. somewhat above that shown in Fig. 1A).

As mud starts to be pumped down the drillstring, the venturi 52 will choke the downflow of mud between its throat and the pulse rings 44, resulting in a down-force on the venturi 52 and hence on the sleeve 22. The spring 34 will have been selected such that the spring rate and free extension length (in relation to the maximum longitudinal separation of the sleeve shoulder 24 from the static ring 28) prevent the mud-flow induced down-force in the sleeve 22 commencing to move the sleeve 22 downwards within the inclinometer housing 12+14+16 until the mud flow-rate exceeds a predetermined lower magnitude (eg. about 400 gallons per minute).

As the sleeve 22 commences to move downwards from its uppermost position towards its lowermost position within the inclinometer housing, the venturi 52 will pass over the pulse rings 44 in succession, and on each such passage a pulse of mud back-pressure will be generated and propagated back up the column of drilling mud in the drillstring to be observed on pressure-sensitive equipment at the wellhead. In this start-up phase, these mud back-pressure pulses are not representative of borehole inclination, but can be utilised as an indication that the sleeve 22 is correctly moving downwards, and by counting the requisite number of pulses, an indication will be gained that the sleeve 22 has properly moved to its lowermost position (or that this has not happened, as monitored by an insufficiency of mud pulses).

After drilling for a selected length of time (with mud continuing to be pumped), it is intended to make a remote measure of borehole inclination, and it is assumed that the inclinometer 10 at this time has an inclination from vertical matching that of the encompassing borehole (and that this inclination does not exceed the maximum that can be measured by the inclinometer 10). To commence an inclination measurement, movement of the drillstring is halted, and then the mud flow down the drillstring is stopped by halting the mud pumps.

As the downflow of mud ceases, the corresponding venturi-induced down-force on the sleeve 22 also ceases, and the sleeve 22 commences to be driven upwards by the spring 34, at a rate controlled by the hydraulic damper (specifically by the highly choked flow of oil through the flow-restricting hole 56 in the static ring 28).

Assuming the inclinometer 10 to have a non-zero inclination from vertical, the pendulum 46 will have pivoted about its spherical pivot 48 to a position in which the pendulum remains truly vertical but is now no longer hanging down the longitudinal central axis of the inclinometer 10. This laterally offsets the latching shoulder 50 from a concentric position within the array of steps 54.

As the sleeve 22 steadily rises within the inclinometer 10 relative to the pendulum 46, one of the steps 54 will latch on the pendulum shoulder 50 to halt further upward movement of the sleeve 22. Because larger diameter steps 54 traverse the pendulum latching shoulder 50 prior to smaller diameter steps 54 during upward movement of the sleeve 22 then the greater is the inclination of the inclinometer 10 from the truly vertical pendulum 46, the earlier during such upward movement of the sleeve 22 will the shoulder 50 latch on one of the steps 54, the latched-on step 54 having a relatively large diameter for a relatively large inclination, and vice versa.

After a period of time at least equal to the time required for the sleeve 22 to reach its uppermost position within the inclinometer 10, and with the drillstring still held motionless, the wellhead mud pumps are restarted and run at a suitable steady rate to provide a non-fluctuating mud flow down the drillstring and through the inclinometer 10, the mud flowrate being sufficient to overcome the spring 34 and start the sleeve 22 moving downwards from its pendulum-latched position. As the sleeve 22 moves downwards eventually to arrive at its lowermost position, the venturi 52 will traverse a number of pulse rings 44 and produce the same number of mud back-pressure pulses to be detected and monitored and/or recorded at the wellhead. This "number" of pulse rings 44 and hence of mud pulses is directly dependent on which of the steps 54 the pendulum latching shoulder 50 latched upon during the immediately prior upward movement of the sleeve 22 (when mud pumping had temporarily ceased), and hence on the inclination from vertical of the inclinometer 10 at the time of latching. As already detailed, the greater the inclination, the further up the sleeve 22 does latching occur, and the less the upward movement of the sleeve 22 from its lowermost position when latching halts further upward sleeve movement. Thus the "number" of mud pulses occurring when the mud pumps are restarted is an inverse function of the inclination from vertical.

It may be arranged that at the maximum measurable inclination (corresponding to latching of the pendulum shoulder 50 on the highest (largest diameter) step 54 within the sleeve 22), zero or one mud pulse is generated, the number of mud pulses increasing with decreasing inclination from vertical up to the maximum possible number of mud pulses which can be generated by the inclinometer 10 (thirteen pulses in the illustrated embodiment), corresponding to verticality of the inclinometer 10 (when the pendulum 46 will have remained concentric within the sleeve 22 and not latched on any of the steps 54).

The inclination-determined train of mud back-pressure pulses telemeters the borehole inclination to the wellhead in a form which is easily detectable on standard mud pump output pressure gauges and recorded in readily recognisable manner on standard logging equipment, inclination determination requiring only a minimal interruption of drilling, and no tripping or wirelining.

The clarity and resolution of mud back-pressure pulses is enhanced by the speed of movement of the sleeve 22 within the inclinometer 10 being regulated to a slow fluctuation-free value by the hydraulic damper, as previously detailed.

When the sleeve 22 is in its lowest position (as shown in Fig. 1B) in readiness to prime the inclinometer 10 for an inclination measurement, the pendulum 46 is axially centred on the longitudinal axis of the inclinometer 10 by means of a spider 74 which engages the conical upper surface of the pendulum bob, such contact also defining the lowermost position of the sleeve 22. The spider 74 is clamped within the bore of the sleeve 22 near the upper end of the sleeve 22 but somewhat below the venturi 52, at a position which ensures that in the spider-defined lowermost position of the sleeve 22, the venturi 52 is adequately below the lowermost one of the pulse rings 44 on the static mounting assembly 36. The spider 74 is formed as a peripheral ring supporting a number of inwardly projecting fingers dimensioned to minimise restriction on mud flow and to avoid pulse-forming interaction with the pulse rings 44.

The internal dimensions of the inclinometer 10, and specifically of the diameter of the steps 54 in relation to the diameter of the pendulum shoulder 50 and the distance to the shoulder 50 from the pendulum pivot 48, are preferably selected such that the inclinometer 10 is capable of measuring inclinations from the vertical in increments of half a degree, up to a maximum inclination from vertical of about six or seven degrees.

## Claims

1. An inclinometer for measuring the angle from vertical of a well bore characterized by comprising a tubular casing (1) formed at its opposite ends with connection means arranged to permit the casing to be connected into a drill string as a constituent part of the string, a sleeve (22) located within the casing and spring-urged to move axially in the direction from one end position to another end position within the casing the inner surface of said sleeve being formed with a series of circumferential steps (54) of progressively increasing diameters and with an internally projecting annular venturi ring (52) displaced axially from the series of steps, damping means arranged to control the rate of axial movement of the sleeve, a central rod (42) fixed to and located co-axially of the casing and projecting into one end of the sleeve, said central rod (42) having a portion formed with a series of co-axial rings (44) and a pendulum (46) universally pivotally attached (48) to the rod at one end of the rod and formed with an annular radially projecting latching shoulder (50), the relative dispositions of the parts being such that when the sleeve 22 is at said one position the venturi ring (52) presented by the sleeve is near one end of the portion of the central rod formed with the co-axial rings (44) and the pendulum (46) is in the portion of the sleeve formed with the steps (54) of smallest diameter and when the sleeve(22) is at said other position the venturi ring (52) is withdrawn from the portion of the central rod presenting the co-axial rings (44) and the pendulum (46) is withdrawn from beyond the step (54) of largest diameter of the stepped portion of the sleeve.

2. An inclinometer according to claim 1 characterized in that the sleeve presents an internal pendulum-centring spider (74) positioned such that in said one position of the sleeve said spider engages the pendulum and holds it in a central position with respect to the sleeve.

3. An inclinometer according to claim 1 characterized in that the damping means is provided by forming the main portion of the sleeve (22) to an outside diameter less than the inside diameter of the casing thus presenting an annular gap between the sleeve and the casing (12,14,16) and forming another portion of the sleeve as an outwardly projecting shoulder (24) of a diameter to fit the casing as a piston, and a static sealing ring (28) fixed to the casing surrounding the sleeve and sealingly in contact therewith at a position spaced from said shoulder (24) on the sleeve thus providing an annular space of finite volume, means being provided to admit a damping fluid into said annular space.

4. An inclinometer according to claim 1 characterized in that the axial spacing between adjacent rings (44) on the central rod is the same as the spacing between adjacent steps (54) in the inner surface of the sleeve (22).

5. An inclinometer according to claim 3 characterized by incorporating an annular floating piston (58) capable of moving axially in said annular gap but limited in its axial movement in the direction away from the shoulder (24) on the sleeve by an abutment presented by the casing.

6. An inclinometer according to claims 1 and 3 characterized in that the spring urging the sleeve (22) to move to said one end position is a helical compression spring (34) surrounding the sleeve and located in the annular space defined by the outer surface of the sleeve (22), the inner surface of the casing (12,14,16) the shoulder (24) on the sleeve and the static sealing ring (28) presented by the casing.

7. An inclinometer according to claim 1 characterized in that the casing is formed in several co-axial portions (12,14,16) screw-threaded to one another.

8. An inclinometer according to claims 1 and 7 characterized in that the central rod (42) is supported in the casing by at least one spider (40) clamped between adjacent portions (12,14) of the casing.

9. An inclinometer according to claims 1 and 7 characterized in that the static sealing ring (28) presented by the casing is clamped between adjacent portions (14,16) of the casing.

10. An inclinometer according to claims 1 and 7 characterized in that the abutment presented by the casing and limiting floating movement of the floating sealing ring is presented by the end of one portion of the casing section (16) which is formed to be of larger diameter than the adjacent portion.

# Fig.1A.

# Fig.1B.